# EUROPÄISCHE PATENTSCHRIFT

(11) **EP 0 548 531 B1**
(45) Veröffentlichungstag und Bekanntmachung des Hinweises auf die Patenterteilung: **13.07.1994**
(21) Anmeldenummer: 92119519.4
(22) Anmeldetag: 14.11.1992
(51) Int. Cl.: A01G 9/24, E04B 2/96

(54) **Klappflügel eines Glasdaches oder einer Glaswand**
Tiltable window of a glazed roof or a glazed wall
Fenêtre basculante d'un toit vitré ou d'un mur vitré

(30) Priorität: 19.12.1991 DE 4141994
(43) Veröffentlichungstag der Anmeldung: 30.06.1993
(73) Patentinhaber: Philippi, Gerd, 66793 Saarwellingen (DE)
(72) Erfinder: Philippi, Gerd, 66793 Saarwellingen (DE)
(74) Vertreter: Bernhardt, Winfrid, Dr.-Ing.

(56) Entgegenhaltungen:
- DE-A- 3 418 071
- DE-C- 3 317 948
- US-A- 1 926 160

## Beschreibung

Die Erfindung betrifft einen Klappflügel eines Glasdaches oder einer Glaswand, das bzw. die aus einem tragenden Skelett und auf diesem angebrachten Glasscheiben, insbesondere Mehrfach-Glasscheiben, besteht, wobei an dem Platz des Klappflügels statt einer Glasscheibe ein Festrahmen auf den betreffenden Skelettbauteilen angebracht ist, an dem ein mit einer in ihn eingesetzten Glasscheibe den Klappflügel bildender Klapprahmen angelenkt ist und der Festrahmenquerschnitt und der Klapprahmenquerschnitt im wesentlichen mit gleicher Breite wie das Skelettbauteil über diesem liegen und der Festrahmenquerschnitt zweifach gewinkelt ist, derart, daß der eine äußere Winkelschenkel mit seinem freien Ende auf das Skelettbauteil stößt, der mittlere Winkelschenkel sich mit Abstand über dem Skelettbauteil erstreckt und der andere äußere Winkelschenkel sich parallel zu dem ersteren äußeren Winkelschenkel, jedoch mit entgegengesetzter Richtung, an den mittleren Winkelschenkel anschließt.

Ein solcher Klappflügel ist aus der DE-C-33 17 948 bekannt.

Durch Benutzung bekannt sind Klappflügel, bei denen der Festrahmen mit einem Winkelschenkel seines Querschnitts in gleicher Weise und mit gleicher Dicke auf den Sparren und Pfetten des Glasdaches liegt wie die angrenzenden Glasscheiben und an einem anderen, nach oben ragenden Winkelschenkel den Klappflügel trägt. Damit braucht, wie auch nach der erstgenannten Schrift, nichts weiter an dem Glasdach geändert zu werden; die angrenzenden fest verlegten Glasscheiben und der Festrahmen sind über den Sparren und Pfetten in gleicher Weise durch ein Deckprofil mit zwischengelegtem Dichtstreifen gehalten wie sonst die jeweils zwei auf den Sparren und Pfetten liegenden Glasscheiben.

Die Konstruktion erweist sich jedoch als störanfällig. Entsteht z.B. ein Haarriß an Gehrungsverbindung, so kommt es leicht zu Wassereintritt. Auch optisch befriedigt die Einrichtung nicht; Der Rahmen insgesamt liegt weitgehend neben den Skelettbauteilen und verkleinert die Glasfläche. Gleiches gilt für das Lüftungsfenster nach der DE-A-34 18 071.
Bei der erstgenannten Konstruktion wird dies vermieden. Die hier schmaleren Profilquerschnitte erschweren jedoch eine Wärmedämmung.

Der Erfindung liegt die Aufgabe zugrunde, einen dauerhaft funktionssicheren, optisch wenig störenden Klappflügel zu schaffen, dessen Rahmenkonstruktion darüber hinaus wärmegedämmt ist.

Gemäß der Erfindung wird dieser Zweck ausgehend von einem Klappflügel der eingangs genannten Art dadurch erfüllt, daß der Festrahmen aus einem zusammengesetzten Profil hergestellt ist, das aus zwei die genannten äußeren Winkelschenkel bildenden Kastenprofilen und einer in dem genannten mittleren Winkelschenkel liegenden, die Kastenprofile als Isoliersteg verbindenden Leiste aus einem weniger wärmeleitenden Material als die Kastenprofile besteht, die an ihren beiden Rändern in an den Kastenprofilen ausgebildeten Zangenprofilen eingeklemmt ist.

In dieser Weise, als von Zangenprofilen eingeklemmter Steg zwischen den beiden äußeren Schenkeln des Festrahmenquerschnitts, von denen einer an den Innenraum und einer an die Außenseite grenzt, läßt sich erfindungsgemäß in dem geringen zur Verfügung stehenden Raum eine Wärmedämmung unterbringen.

Die Vorteile der senkrecht zu der Wand oder dem Dach fluchtenden Anordnung des Festrahmens und des Klapprahmens über dem Skelettbauteil, d.h. bei einem Glasdach über den Sparren und Pfetten und bei einer Glaswand vor den Pfosten und Riegeln, bleiben erhalten:
Es ergibt sich eine Abführung von etwa in den Festrahmen eindringendem Wasser mindestens weitgehend auf die benachbarten festen Glasplatten. Die Glasscheibe des Klappflügels erhält die gleichen Abmessungen wie die festen Glasscheiben. Sie fügt sich damit störungsfrei in das Bild der Glasfelder ein. Entsprechendes gilt für den Gesamtrahmen (Festrahmen + Klapprahmen), der in der Breite der Sparren und Pfetten bzw. Pfosten und Riegel bleibt.

Als Ausgestaltung weiter im einzelnen ist vorgesehen, daß an den beiden, gleichen, Kastenprofilen, ferner an der den Zangenprofilen benachbarten Schmalseite, ein hinterschnittenes Halteprofil für eine Dichtleiste und an der den Zangenprofilen ferneren Schmalseite ein weiteres Halteprofil für eine weitere, weichere Dichtleiste, vorzugsweise eine Dichtlippe, ausgebildet ist, daß in die beiden dem Klapprahmen zugekehrten Halteprofile die Dichtprofile eingesetzt sind und die beiden anderen, dem Skelettbauteil zugekehrten Halteprofile leer sind, und daß das genannte weitere leere Halteprofil auf dem mit einem Dichtungsbelag versehenen, Skelettbauteil aufliegt und das erstgenannte leere Halteprofil über einen als Gegenstück zu dem Dichtungsbelag angeordneten Dichtstreifen auf die benachbarte Glasscheibe drückt durch die Kraft einer Anzahl von Schrauben, mit denen der Festrahmen durch den Isoliersteg, den Dichtstreifen und den Dichtungsbelag hindurch an dem Skelettbauteil angeschraubt ist.
Mit den beiden gleichen Kastenprofilen läßt sich das zusammengesetzte Profil rationell herstellen. Das wird bei verschiedenen Halteprofilen dadurch ermöglicht, daß in dem zweifach gewinkelten Querschnitt die eine Schmalseite des einen Kastenprofils und die andere Schmalseite des anderen Kastenprofils nach oben kommen. Die nach unten kommenden leeren Kastenprofile stören nicht; sie drücken sich im Gegenteil dichtend in den Dichtungsbelag des Skelettbauteils bzw. den Dichtstreifen über der benachbarten Glasscheibe - hier an der Außenseite noch wichtiger - ein. Die weichere Dichtleiste, insbesondere in Form einer Dichtlippe, an dem äußeren Kastenprofil vermeidet an der Seite der, gleichfalls an dem äußeren Kastenprofil angebrachten, Scharniere Zwängungen und stellt im übrigen sicher, daß der Klapprahmen wirklich auf beiden Dichtleisten aufliegt.

An der den Zangenprofilen ferneren Schmalseite der Kastenprofile kann ein Hakenprofil ausgebildet sein, dessen einer, in Abstand von der Schmalseite, vorzugsweise parallel zu ihr, liegender Schenkel als das genannte weitere Halteprofil gestaltet ist.

Die durch das Hakenprofil entstehende Nut kann bei bestimmten Anordnungen des Klappflügels, insbesondere an einer Glaswand, als Wasserrinne dienen. Sie kann auch ein Scharnierband aufnehmen.

Für den Klapprahmen wird vorgeschlagen, daß er aus einem äußeren und einem inneren Rahmen unter Einfassung der Glasscheibe des Klappflügels zwischen Dichtstreifen zusammengesetzt ist, daß der äußere Rahmen aus einem Profil, vorzugsweise aus Aluminium hergestellt ist, an dem von einer winkelförmigen äußeren Profilwand, vorzugsweise kastenförmig, ein Vorsprung nach innen ragt, an dem ein Sitz für einen im Querschnitt rechteckigen Isoliersteg aus einem Material geringerer Leitfähigkeit, vorzugsweise einem Polyamid, ausgebildet ist, daß der innere Rahmen aus einer flachen Leiste von geringerer Breite als das Profil des äußeren Rahmens hergestellt ist, an der gleichfalls ein Sitz für den Isoliersteg ausgebildet ist, und daß die beiden Rahmen durch den Isoliersteg hindurch zusammengeschraubt sind.

Der Isoliersteg vermeidet wiederum gemäß Erfindungsaufgabe eine Wärmebrücke oder mildert sie jedenfalls.

Der Vorsprung und noch einmal mehr seine Kastenform stabilisieren den Klapprahmen, da dessen Stabilität hauptsächlich durch den, an einer Seite durch Gelenke und an der gegenüberliegenden Seite durch ein Schloß mit dem Festrahmen verbundenen, äußeren Rahmen bestimmt wird, mit dem der innere Rahmen nur zur Einfassung der Glasscheibe verschraubt ist. Die im äußeren Rahmen in dem kastenförmigen Vorsprung endenden Schrauben sind von außen nicht zugänglich; dadurch wird der Klappflügel einbruchsicherer.
An dem inneren Rahmen kann die erstgenannte Dichtleiste und an dem äußeren Rahmen kann die weitere Dichtleiste anliegen.

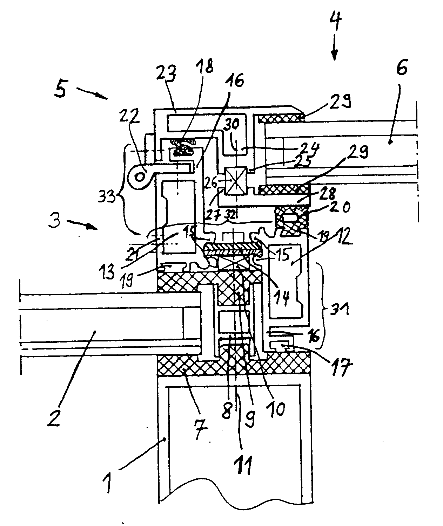

Die Zeichnung gibt ein Ausführungsbeispiel der Erfindung wieder.

Sie zeigt einen Querschnitt durch einen Ausschnitt aus einem Glasdach.

In der Zeichnung erscheinen ein Sparren 1, eine Doppel-Glasscheibe 2 und ein Festrahmen 3 für einen Klappflügel 4, der aus einem Klapprahmen 5 mit eingesetzter Doppel-Glasscheibe 6 besteht.
Der Sparren 1 ist Teil eines tragenden Skelettes aus parallel zueinander geneigt angeordneten Sparren und rechtwinklig zu diesem waagerecht verlaufenden Pfetten. Die so gebildeten Felder sind überdeckt von Glasscheiben 2, die im wesentlichen, wie gezeichnet, an allen vier Seiten auf zwei Sparren 1 und zwei Pfetten aufliegen. In einem solchen Feld ist die Glasscheibe 1 ersetzt durch den Festrahmen 3 mit dem Klappflügel 4.

Die Sparren 1 sind mit einem profilierten Dichtungsbelag 7 versehen, der durch ein Stegprofil 8 als Steckverbindung mit einem im wesentlichen gleichen, über den Glasscheiben 1 umgekehrt aufgebrachten Dichtstreifen 9 verbunden ist. Eine am Platz des Festrahmens 3 entfernte Deckleiste verläuft sonst über dem Dichtstreifen 9 und ist durch diesen, das Stegprofil 8 und den Dichtungsbelag 7 hindurch mit dem Sparren 1 verschraubt, so daß die beiden auf dem Sparren 1 abgestützten Glasscheiben 2 festgehalten sind. Auf den Pfetten können der Dichtungsbelag, der Dichtstreifen und die Deckleiste in Einzelheiten etwas anders gestaltet sein, der Grundaufbau ist jedoch gleich.
Für den Festrahmen 3 sind die Dichtstreifen 9 einseitig abgeschnitten, wie dargestellt. In gleicher Weise wie sonst die Deckleisten, jedoch unter Zwischenlegung von Abstandhaltern 10, ist mittels bei 11 angedeuteter Schrauben der Festrahmen 3 befestigt und hält er die angrenzenden Glasscheiben 2.

Die vier Rahmenschenkel des Festrahmens 3 sind zusammengesetzt aus zwei gleichen Kastenprofilen 12 und 13 aus Aluminium und einem Isoliersteg 14 aus einem Polyamid. Der Isoliersteg 14 verbindet die Kastenprofile 12 und 13, indem er in an diesen ausgebildeten Zangenprofilen 15 eingeklemmt ist. An den äußeren Schmalseiten der rechteckigen Kastenprofile ist, ausgehend als Verlängerung der inneren Längswand, ein Hakenprofil 16 ausgebildet, dessen freier Schenkel ein Halteprofil 17 für eine Dichtlippe 18 darstellt. Eine Dichtlippe 18 ist jedoch nur in das Halteprofil 17 des oberen Kastenprofils 13 eingesetzt. Das Halteprofil 17 des unteren Kastenprofils 12 wird durch die Schrauben 11 auf den Dichtungsbelag 7 gedrückt. An den anderen Schmalseiten der Kastenprofile ist ein Halteprofil 19 für ein Dichtprofil 20 ausgebildet. Hier ist nur in das Halteprofil 19 des unteren Kastenprofils 12 ein Dichtprofil 20 eingesetzt und nicht in das Halteprofil 19 des Kastenprofils 13. Dieses wird durch die Schrauben 10 auf den Dichtstreifen 9 gedrückt.
An dem oberen Kastenprofil 13 sind an der äußeren Längswand Entwässerungslöcher 21 gebohrt und an der äußeren Schmalseite unter dem Hakenprofil 16 Scharniere 22 angebracht, die den Klapprahmen 5 halten. An dem gegenüberliegenden Rahmenschenkel des Klapprahmens 5 ist statt der Scharniere ein Schloß angebracht, jedoch auf der Innenseite.

Der Klapprahmen 5 besteht primär aus einem Winkelprofil 23, an dessen Innen- oder Unterseite kastenförmig ein Vorsprung 24 ausgebildet ist mit einem Sitz 25 am Ende für einen Isoliersteg 26.
Gleichfalls einen Sitz 27 für den Isoliersteg 26 weist eine flache Leiste auf, die zur Einfassung der Glasscheibe 6 unter Zwischenlegung jeweils eines Dichtstreifens 29 oben und unten über den Isoliersteg 26 mittels durch diesen hindurchgeführter, bei 30 angedeuteter Schrauben mit dem Winkelprofil 23 verschraubt ist.

Die weiter oben erwähnten Winkelschenkel des Festrahmenquerschnitts sind in der Zeichnung durch Klammern kenntlich gemacht und wie folgt nummeriert: ersterer äußerer Winkelschenkel 31, mittlerer Winkelschenkel 32 und anderer äußerer Winkelschenkel 33. Nach der Abgrenzung durch die Klammern bilden die Kastenprofile 12 und 13 mit einem Teil ihrer Querschnittslänge den ersteren äußeren Winkelschenkel 31 bzw. den anderen äußeren Winkelschenkel 33 und mit ihrer übrigen Querschnittslänge zusammen mit dem Isoliersteg 14 den mittleren Winkelschenkel 32. Diese Abgrenzung ist zwischen den Winkelschenkeln 31 und 32 weniger von Belang. Zwischen den Winkelschenkeln 32 und 33 ist sie aber insofern angebracht, als der mittlere Winkelschenkel sich über einen Dichtstreifen und die feste Glasscheibe legt, während der erstere äußere Winkelschenkel die Dicke der neben ihm auf dem Skelettbauteil liegenden festen Glasscheibe, regelmäßig einer Mehrfach-Glasscheibe, überbrückt; der nach oben ragende andere äußere Winkelschenkel läßt dann Platz für einen die Glasscheibe des Klappflügels einfassenden Teil des Klapprahmens.

## Patentansprüche

1. Klappflügel eines Glasdaches oder einer Glaswand, das bzw. die aus einem tragenden Skelett (1) und auf diesem angebrachten Glasscheiben (2), insbesondere Mehrfach-Glasscheiben (2), besteht, wobei an dem Platz des Klappflügels (4) statt einer Glasscheibe (2) ein Festrahmen (3) auf den betreffenden Skelettbauteilen (1) angebracht ist, an dem ein mit einer in ihn eingesetzten Glasscheibe (6) den Klappflügel (4) bildender Klapprahmen (5) angelenkt ist und der Festrahmenquerschnitt und der Klapprahmenquerschnitt im wesentlichen mit gleicher Breite wie das Skelettbauteil (17) über diesem liegen und der Festrahmenquerschnitt zweifach gewinkelt ist, derart, daß der eine äußere Winkelschenkel (31) mit seinem freien Ende (17) auf das Skelettbauteil (1,7) stößt, der mittlere Winkelschenkel (32) sich mit Abstand über dem Skelettbauteil (1,7) erstreckt und der andere äußere Winkelschenkel (33) sich parallel zu dem ersteren äußeren Winkelschenkel (31), jedoch mit entgegengesetzter Richtung, an den mittleren Winkelschenkel (32) anschließt,
dadurch gekennzeichnet,
daß der Festrahmen aus einem zusammengesetzten Profil hergestellt ist, das aus zwei die genannten äußeren Winkelschenkel (31;33) bildenden Kastenprofilen (12;13) und einer in dem genannten mittleren Winkelschenkel (32) liegenden, die Kastenprofile als Isoliersteg (14) verbindenden Leiste aus einem weniger wärmeleitenden Material als die Kastenprofile besteht, die an ihren beiden Rändern in an den Kastenprofilen (12;13) ausgebildeten Zangenprofilen (15) eingeklemmt ist.

2. Klappflügel nach Anspruch 1,
dadurch gekennzeichnet,
daß an den beiden, gleichen, Kastenprofilen (12;13) ferner an der den Zangenprofilen (15) benachbarten Schmalseite ein hinterschnittenes Halteprofil (19) für eine Dichtleiste (20) und an der den Zangenprofilen (15) ferneren Schmalseite ein weiteres Halteprofil (17) für eine weitere, weichere Dichtleiste (18), vorzugsweise eine Dichtlippe (18), ausgebildet ist, daß in die beiden dem Klapprahmen (5) zugekehrten Halteprofile (17;19) die Dichtprofile (18;20) eingesetzt sind und die beiden anderen, dem Skelettbauteil (1;7) zugekehrten Halteprofile (17;19) leer sind, und daß das genannte weitere leere Halteprofil (17) auf dem, mit einem Dichtungsbelag (7) versehenen, Skelettbauteil (17) aufliegt und das erstgenannte leere Halteprofil (19) über einen als Gegenstück zu dem Dichtungsbelag (7) angeordneten Dichtstreifen (9) auf die benachbarte Glasscheibe (2) drückt durch die Kraft einer Anzahl von Schrauben (11), mit denen der Festrahmen (3) durch den Isoliersteg (14), den Dichtstreifen (9) und den Dichtungsbelag (7) hindurch an dem Skelettbauteil (1) angeschraubt ist.

3. Klappflügel nach Anspruch 2,
dadurch gekennzeichnet,
daß an der den Zangenprofilen (15) ferneren Schmalseite der Kastenprofile (12;13) ein Hakenprofil (16) ausgebildet ist, dessen einer, in Abstand von der Schmalseite, vorzugsweise parallel zu ihr, liegender Schenkel als das genannte weitere Halteprofil (17) gestaltet ist.

4. Klappflügel nach Oberbegriff des Patentanspruches 1 oder einem der Ansprüche 1 bis 3,
dadurch gekennzeichnet,
daß der Klapprahmen (5) aus einem äußeren (23,24) und einem inneren Rahmen (28) unter Einfassung der Glasscheibe (6) des Klappflügels (4) zwischen Dichtstreifen (29) zusammengesetzt ist, daß der äußere Rahmen (23,24) aus einem Profil, vorzugsweise aus Aluminium, hergestellt ist, an dem von einer winkelförmigen äußeren Profilwand (23), vorzugsweise kastenförmig, ein Vorsprung (24) nach innen ragt, an dem ein Sitz (25) für einen im Querschnitt rechteckigen Isoliersteg (26) aus einem Material geringerer Wärmeleitfähigkeit, vorzugsweise einem Polyamid, ausgebildet ist, daß der innere Rahmen (28) aus einer flachen Leiste (28) von geringerer Breite als das Profil des äußeren Rahmens hergestellt ist, an der gleichfalls ein Sitz (27) für den Isoliersteg (26) ausgebildet ist, und daß die beiden Rahmen (23,24;28) durch den Isoliersteg (26) hindurch zusammengeschraubt (30) sind.

5. Klappflügel nach den Ansprüchen 2 oder 3 und 4,
dadurch gekennzeichnet,
daß die erstgenannte Dichtleiste (20) an dem inneren Rahmen (28) und die genannte weitere Dichtleiste (18) an dem äußeren Rahmen (23,24) anliegt.

## Claims

1. Top-hung window sash of a glass roof or of a glass wall, which roof or wall is composed of a load-bearing skeleton (1) and of glass panes (2), in particular multiple glass panes (2), which are fitted thereon, at the location of the top-hung window sash (4) there being fitted, instead of a glass pane (2), a fixed frame (3) on the relevant skeleton structural parts (1), on which fixed frame there is articulated, with a glass pane (6) inserted into it, a top-hung frame (5) which forms the top-hung window sash (4), and the fixed-frame cross-section and the top-hung-frame cross-section are located above the skeleton structural part (1, 7) and essentially have the same width as the latter, and the fixed-frame cross-section is angled off twice such that one outer angle leg (31) butts, with its free end (17), against the skeleton structural part (1, 7), the central angle leg (32) extends at a distance above the skeleton structural part (1, 7), and the other outer angle leg (33), parallel to the first outer angle leg (31), but in the opposite direction thereto, adjoins the central angle leg (32), characterized in that the fixed frame is produced from an assembled profile which is composed of two box profiles (12; 13), forming the abovementioned outer angle legs (31; 33), and of a moulding which is located in the abovementioned central angle leg (32), the moulding connects the box profiles as an insulating web (14), consists of a material which conducts heat to a lesser extent thant that of the box profiles and is clamped, on its two borders, in gripper profiles (15) which are formed on the box profiles (12; 13).

2. Top-hung window sash according to Claim 1, characterized in that on the two, identical box profiles (12; 13) there is further formed, on the narrow side neighbouring the gripper profiles (15), an undercut retaining profile (19) for a sealing moulding (20) and, on the narrow side remote from the gripper profiles (15), a further retaining profile (17) for a further, softer sealing moulding (18), preferably a sealing lip (18), in that the sealing profiles (18; 20) are inserted into the two retaining profiles (17; 19), directed towards the top-hung frame (5), and the two other retaining profiles (17; 19), directed towards the skeleton structural part (1; 7), are empty, and in that the abovementioned further, empty retaining profile (17) bears on the skeleton structural part (1, 7), provided with a sealing covering (7), and the first-mentioned empty retaining profile (19) presses, via a sealing strip (9) arranged as counterpart with respect to the sealing covering (7), onto the neighbouring glass pane (2) by the force of a number of screws (11) by means of which the fixed frame (3) is screwed, through the insulating web (14), the sealing strip (9) and the sealing covering (7), on the skeleton structural part (1).

3. Top-hung window sash according to Claim 2, characterized in that there is formed, on that narrow side of the box profiles (12; 13) which is remote from the gripper profiles (15), a hook profile (16), whose leg located at a distance from the narrow side, preferably parallel thereto, is configured as the abovementioned further retaining profile (17).

4. Top-hung window sash according to the preamble of Patent Claim 1 or one of the Claims 1 to 3, characterized in that the top-hung frame (5) is assembled from an outer (23, 24) and an inner frame (28), the glass pane (6) of the top-hung window sash (4) being enclosed between sealing strips (29), in that the outer frame (23, 24) is produced from a profile, preferably consisting of aluminium, on which there projects inwards, from an angular outer profile wall (23), preferably in the form of a box, a protrusion (24) on which there is formed a seat (25) for a cross-sectionally rectangular insulating web (26) consisting of a material of low thermal conductivity, preferably of a polyamide, in that the inner frame (28) is produced from a flat moulding (28) which has a smaller width than the profile of the outer frame and on which there is likewise formed a seat (27) for the insulating web (26), and in that the two frames (23, 24; 28) are screwed together (30) through the insulating web (26).

5. Top-hung window sash according to Claims 2 or 3 and 4, characterized in that the first-mentioned sealing moulding (20) rests on the inner frame (28) and the abovementioned further sealing moulding (18) rests on the outer frame (23, 24).

## Revendications

1. Fenêtre basculable d'un toit vitré ou d'une paroi vitrée, qui consiste en une structure portante (1) et en des vitres (2) agencées sur celle-ci, notamment des vitres multiples (2), un cadre rigide de fenêtre (3) étant agencé sur les éléments de la structure portante (1) à l'endroit de la fenêtre basculable (4) au lieu d'une vitre (2), cadre rigide auquel est articulé un cadre basculable (5) muni d'une vitre (5) et constituant la fenêtre basculable (4), la section du cadre fixe et la section du cadre basculable présentant essentiellement la même largeur que l'élément de structure (1, 7) et le cadre fixe et le cadre basculable étant agencés sur celui-ci, la section du cadre fixe étant doublement coudée de telle sorte que la branche extérieure (31) prend appui avec son extrémité libre (17) sur l'élément de structure (1, 7), la branche médiane (32) s'étend à distance au-dessus de l'élément de structure (1, 7) et l'autre branche extérieure (33) s'étend parallèlement à la première branche extérieure (31) mais en sens opposé à la suite de la branche médiane (32),
caractérisée en ce que le cadre fixe consiste en un profilé composé qui est constitué par deux profilés tubulaires rectangulaires (12; 13) qui forment lesdites branches extérieures (31, 33) et par un profilé situé dans ladite branche médiane (32), qui relie les profilés tubulaires rectangulaires de façon isolante (14), qui consiste en un matériau ayant une conductibilité thermique inférieure à celle des profilés tubulaires rectangulaires et qui est encastré le long des ses deux bords dans des profils de pinçage (15) formés aux profilés tubulaires rectangulaires (12; 13).

2. Fenêtre basculable selon la revendication 1,
caractérisée en ce que les deux profilés tubulaires rectangulaires identiques (12; 13) comportent, en outre, sur le côté étroit adjacent aux profils de pinçage (15), un profil de fixation (19) à contre-dépouille pour un joint d'étanchéité (20), et, sur le côté étroit le plus éloigné des profils de pinçage (15), un autre profil de fixation (17) pour un autre joint d'étanchéité plus souple, de préférence une lèvre d'étanchéité (18), en ce que les joints d'étanchéité (18, 20) sont agencés dans les deux profils de fixation (17; 19 ) orientés vers le cadre basculable (5) et les deux autres profils de fixation(17;19) orientés vers la structure (1; 7) sont vides, et en ce que ledit autre profil de fixation vide (17) repose sur l'élément de structure (1, 7) muni d'un revêtement d'étanchéité (7) et le premier profil de fixation vide (19) prend appui sur la vitre adjacente (2) par l'intermédiaire d'une bande d'étanchéité (9) servant de contre-partie au revêtement d'étanchéité (7), grâce à la force d'une multiplicité de vis (11) qui solidarisent par vissage le cadre fixe (3) à travers le profilé isolant (14), la bande d'étanchéité (9) et le revêtement d'étanchéité (7), à l'élément de structure (1).

3. Fenêtre basculable selon la revendication 2,
caractérisée en ce que le côté étroit des profilés tubulaires rectangulaires (12; 13), le plus éloigné des profils de pinçage (15) comporte un profil en forme de crochet (16) dont l'une des branches disposée à distance du côté étroit, de préférence parallèlement à celui-ci, constitue ledit autre profil de fixation (17).

4. Fenêtre basculable selon lapreambule de la revendication 1 ou selon l'une des revendications 1 à 3,
caractérisée en ce que le cadre basculable (5) se compose d'un cadre extérieur (23, 24) et d'un cadre intérieur (28), qui serrent entre eux, par l'intermédiaire de bandes d'étanchéité (29), la vitre (6) de la fenêtre basculable (4), en ce que le cadre extérieur (23, 24) consiste en un profilé, de préférence en aluminium, qui comporte une partie en saillie intérieure (24) sur une paroi profilée extérieure angulaire (23), de préférence en forme de caisson, saillie qui est munie d'un siège (25) pour un profilé d'isolation (26) de section rectangulaire en un matériau de faible conductibilité thermique, de préférence un polyamide, en ce que le cadre inférieur (28) consiste en un profilé plat (28) d'épaisseur réduite par rapport au profilé du cadre extérieur, qui comporte également un siège (27) pour un profilé d'isolation (26), et en ce que les deux cadres (23, 24; 28) sont assemblés par vissage à travers le profilé d'isolation (26).

5. Fenêtre basculable selon les revendications 2 ou 3 et 4, caractérisée en ce que ledit premier joint d'étanchéité (20) vients'appuyer contre le cadre intérieur (28) et ledit autre joint d'étanchéité (18) vient s'appuyer contre le cadre extérieur (23, 24).
